(19) Europäisches Patentamt
European Patent Office
Office européen des brevets

(11) EP 2 894 802 A1

(12) EUROPEAN PATENT APPLICATION
published in accordance with Art. 153(4) EPC

(43) Date of publication:
**15.07.2015 Bulletin 2015/29**

(21) Application number: **13833257.2**

(22) Date of filing: **07.08.2013**

(51) Int Cl.:
***H04L 1/00*** *(2006.01)*

(86) International application number:
**PCT/IB2013/001744**

(87) International publication number:
**WO 2014/033515 (06.03.2014 Gazette 2014/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **03.09.2012 CN 201210320967**

(71) Applicant: **Sharp Kabushiki Kaisha**
**Osaka-shi, Osaka 545-8522 (JP)**

(72) Inventors:
- **DING, Ming**
  **Shanghai (CN)**
- **LIU, Renmao**
  **Shanghai (CN)**
- **HUANG, Lei**
  **Shanghai (CN)**

(74) Representative: **Müller-Boré & Partner**
**Patentanwälte PartG mbB**
**Friedenheimer Brücke 21**
**80639 München (DE)**

# (54) METHODS FOR CONSTRUCTING PRE-CODING MATRIX AND FEEDING BACK INDEX VALUE AND RELATED COMMUNICATION DEVICES

(57) The disclosure provides a method for constructing a three-dimensional (3D) multi-input multi-output (MIMO) pre-coding matrix, a method for feeding back index values of a 3D MIMO pre-coding matrix and related communication devices. The method for constructing a 3D MIMO pre-coding matrix comprises: constructing a first component matrix in a block diagonal form, wherein a diagonal sub-matrix of the first component matrix is a 3D beamforming sub-precoder for a two-dimensional (2D) antenna array; constructing a second component matrix which comprises phase weighting factors as matrix elements, wherein the phase weighting factors characterize coherent combination of signals from the 2D antenna array; and constructing the 3D MIMO pre-coding matrix according to the constructed first and second component matrixes. The method for feeding back index values of a 3D MIMO pre-coding matrix comprises: estimating a MIMO channel; and according to a result of the channel estimation, selecting and feeding back a first index value, a second index value and a third index value.

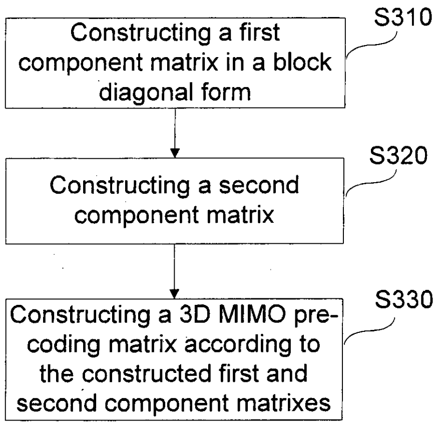


Figure 3



Printed by Jouve, 75001 PARIS (FR)

## Description

### TECHNICAL FIELD

The disclosure generally relates to the technical field of wireless communications, and particularly, to a method for constructing three-dimensional (3D) multi-input multi-output (MIMO) pre-coding matrix, a method for feeding back 3D MIMO pre-coding matrix index value and related communication devices.

### BACKGROUND

Modern wireless mobile communication systems present two notable features: one is broad band and high rate - for example, the bandwidth of the fourth generation wireless mobile communication system may reach 100MHz, and its downlink rate may be up to 1 Gbps; and the other is mobile interconnection, which has promoted emerging services like mobile Internet-browsing, mobile video-on-demand, and on-line navigation, etc. These two features call for advanced wireless mobile communication technologies, such as ultra high rate wireless transmission, inter-region interference suppressing, reliable signal transmission in a mobile environment, distributed/centralized signal processing, etc. In the enhanced 4$^{th}$ generation (4G) and the 5$^{th}$ generation (5G) wireless mobile communication system of the future, various corresponding key technologies have been proposed and discussed to meet the above development requirements, which deserves extensive attention from researchers in the art.

In October of 2007, the International Telecom Union (ITU) has approved the Worldwide Interoperability for Microwave Access (WiMAX) as the fourth 3G system standard. This event, which happened at the end of the 3G era, is in fact a rehearsal of the 4G standard war. Indeed, in order to confront the challenges from the wireless IP technology represented by wireless local area network (WLAN) and WiMAX, the 3GPP organization has set out to prepare for its new system upgrade - standardization of the Long Term Evolution (LTE) system. As a quasi-4G system which is based on Orthogonal Frequency Division Multiplexing (OFDM), the LTE system had its first release published in 2009, and was subsequently put into commercial use in 2010. Meanwhile, the standardization of the 4G wireless mobile system was also started by 3GPP in the first half of 2008, and this system was referred to as Long Term Evolution Advanced (LTE-A). The critical standard specification for physical layer procedures in that system was completed in 2011. In November of 2011, the ITU officially announced in Chongqing, China that the LTE-A system and the WiMAX system are two official standards for 4G systems. Nowadays, global commercialization of the LTE-A system is progressing step by step.

Although the 4G wireless mobile communication systems, represented by the LTE-A system and the WiMAX system, are able to provide users with communication services with higher rates and better user experience, they are still not capable of sufficiently meeting user demands in the next few years or decade. Currently, mobile communication systems serve approximately 5.5 billion users, and it is estimated that this number will rise up to 7.3 billion in 2015. This involves a significant increase in the number of smartphone users - in 2011 there were about 0.428 billion smartphone in the world, while in 2015 this number will be doubled to about 1 billion. The popularization of powerful smartphones has promoted a rapid increase in wireless mobile communication rate. In recent years, the wireless communication rate steadily increases at a rate of 100% every year in the worldwide range. At this increasing rate, in 10 years from now, the rate of wireless mobile communication systems will have to be increased by 1000 times as compared with that of current systems to accommodate basic user requirements in the future. In general, the rate mentioned above mainly refers to that of data services, which account for 90% of the total traffic and include for example downloading of smartphone applications, real-time navigation, cloud based synchronization and sharing of personal information, etc. The traffic of voice services, in comparison, is not likely to increase a lot in the next decade due to relatively slow population growth.

In addition to the challenge of increasing the wireless communication rate by 1000 times, another challenge arises from the burgeoning of the mobile Internet. Currently, 70 percent of Internet accesses are initiated from mobile terminals. The next decade would be a new opportunity period for the IT industry and the major opportunity lies in that the conventional PC Internet would be gradually replaced by the mobile Internet. Then, new user habits would hasten the emergence of new service modes, such as software developing for handheld communication devices and touch screens, location based social network, individual oriented cloud based information management, etc. The mobile Internet impacts the wireless mobile communication systems mainly in two aspects. First, mobile video data traffic will increase significantly which is expected to occupy about 66% of the overall data traffic by 2016. Due to their relatively high level of real-time property, such services as mobile video raise a higher reliability requirement for the wireless mobile communication systems. Second, in the future, most mobile data communications will occur indoors or in hotspot cells, which will also bring challenge to the coverage of the wireless mobile communication system.

Moreover, in 2020, there will be 20 billion machine-to-machine communication devices in the world, and their data traffic will increase to 500% of the current level. How to design systems to support numerous machine-to-machine communication devices is also a topic that needs deep research.

According to the challenges of the next decade, requirements for the development of the enhanced 4G wireless mobile communication system are generally as follows:

- Pursuing for higher wireless broadband rate, with the focus placed on optimization of local hotspot cells;
- Further improving user experience, with communication services on cell edges particularly optimized;
- Continuing researches on new technologies that can improve spectrum utilization efficiency, considering that it is impossible for the available spectrum to be expanded by 1000 times;
- Having to put into use higher frequency bands (5GHz or higher) to obtain broader communication bandwidth;
- Coordinating existing networks (2G/3G/4G, WLAN, WiMAX, etc.) to share the burden of data traffic;
- Optimization specific to different services and applications;
- Strengthening the systems' abilities for supporting massive machine-to-machine communications;
- Flexible, intelligent and low cost network planning and deploying;
- Devising schemes to save power consumption of the network and battery consumption of the user equipments.

To meet the above requirements, in June of this year, a special working meeting was held by 3GPP in Slovenia to discuss key technologies of the 4G wireless mobile communication system. In this meeting, a total of 42 proposals were published and discussed, and there were three major key technologies finally adopted: Enhanced Small Cell, 3D MIMO and Enhanced Coordinated Multi-Point communication.

Among them, the 3D MIMO technology is a new method for improving spectrum utilization efficiency. Conventional transmitting antennas and receiving antennas are generally arranged in a horizontal linear array, and therefore can only identify horizontal angles and generate horizontal beams for multi-user MIMO operations. Considering that the future communication systems will be widely applied in highly populated urban regions with numerous skyscrapers, the transmitting antennas and receiving antennas may be arranged in a mesh array to simultaneously generate horizontal and vertical beams, so that users on different floors of a building may communicate with the base station at the same time. There are two main research topics on the 3D MIMO technology. One is 3D channel modeling which, as an important preparatory step for 3D MIMO research, requires studying theoretical models and fitting a model to actual test results. Existing researches on channel modeling mainly focus on 2D channels and thus only concerns the horizontal direction, for the sake of simplifying theories and supporting conventional 2D MIMO techniques. The other is 3D beamforming, which requires researches on the design of pilot signals, codebook for 3D pre-coding, low-overhead feedback of channel state information, 3D multi-user MIMO transmitting schemes, etc. In the foregoing channel modeling step, the mesh array of antennas need not be considered, since the 3D channel exists objectively. However, in research on 3D beamforming, key features of the channel matrix generated by the mesh array of antennas need to be sufficiently explored for designing in a targeted manner.

[Prior art documents]

Non-patent documents:

1. Vincent Lau, Youjian Liu, and Tai-Ann Chen, On the Design of MIMO Block-Fading Channels with Feedback-Link Capacity Constraint, IEEE Transactions on Communications, vol. 52, no. 1, pp. 62-70, Jan. 2004 2. 3GPP TS 36.211 V10.1.0 (2011-03)

## SUMMARY

[Problem to be solved]

The disclosure focuses on the above-mentioned 3D MIMO technology, and particularly on the following two aspects: (1) how to design effective 3D pre-coding codebook for pre-coding matrix W; and (2) how to realize low-overhead feedback of channel state information.

As to aspect (1): non-patent document 1 provides a theoretical solution of finding the optimal codebook based on Lloyd's algorithm (also referred to as Voronoi iteration or relaxation). The solution provided by non-patent document 1 may give the optimal codebook design mathematically, but it is not employed in practical systems for the reasons below:

- The codebook provided by the Lloyd's algorithm does not have desirable properties, such as a nested structure, unit-norm weights, thereby complicating the practical system implementation;
- Consensus on design details of the Lloyd's algorithm is hard to reach;

- The feedback overhead required by the optimal codebook found using Lloyd's algorithm may be considerable.

Taking all the above factors into consideration, it is specified in section 6.3.4.2.3 of non-patent document 2 that: a sub-optimal codebook design is employed for the 1 D cross-polarized linear antenna array as shown in figure 1. For example, pre-coding codebooks respectively used when the rank of the MIMO channel is one and two are respectively listed in table 1 and table 2 below, wherein $i_1$ and $i_2$ are respectively index numbers of double codewords W1 and W2.

Table 1

| $i_1$ | $i_2$ | | | | | | | |
|---|---|---|---|---|---|---|---|---|
| | **0** | **1** | **2** | **3** | **4** | **5** | **6** | **7** |
| 0-15 | $W^{(1)}_{2i_1,0}$ | $W^{(1)}_{2i_1,1}$ | $W^{(1)}_{2i_1,2}$ | $W^{(1)}_{2i_1,3}$ | $W^{(1)}_{2i_1+1,0}$ | $W^{(1)}_{2i_1+1,1}$ | $W^{(1)}_{2i_1+1,2}$ | $W^{(1)}_{2i_1+1,3}$ |
| $i_1$ | $i_2$ | | | | | | | |
| | **8** | **9** | **10** | **11** | **12** | **13** | **14** | **15** |
| 0-15 | $W^{(1)}_{2i_1+2,0}$ | $W^{(1)}_{2i_1+2,1}$ | $W^{(1)}_{2i_1+2,2}$ | $W^{(1)}_{2i_1+2,3}$ | $W^{(1)}_{2i_1+3,0}$ | $W^{(1)}_{2i_1+3,1}$ | $W^{(1)}_{2i_1+3,2}$ | $W^{(1)}_{2i_1+3,3}$ |
| where $W^{(1)}_{m,n} = \frac{1}{\sqrt{8}}\begin{bmatrix} v_m \\ \varphi_n v_m \end{bmatrix}$ | | | | | | | | |

Table 2

| $i_1$ | $i_2$ 0 | 1 | 2 | 3 |
|---|---|---|---|---|
| 0 - 15 | $W^{(2)}_{2i_1,2i_1,0}$ | $W^{(2)}_{2i_1,2i_1,1}$ | $W^{(2)}_{2i_1+1,2i_1+1,0}$ | $W^{(2)}_{2i_1+1,2i_1+1,1}$ |
| $i_1$ | $i_2$ 4 | 5 | 6 | 7 |
| 0 - 15 | $W^{(2)}_{2i_1+2,2i_1+2,0}$ | $W^{(2)}_{2i_1+2,2i_1+2,1}$ | $W^{(2)}_{2i_1+3,2i_1+3,0}$ | $W^{(2)}_{2i_1+3,2i_1+3,1}$ |
| $i_1$ | $i_2$ 8 | 9 | 10 | 11 |
| 0 - 15 | $W^{(2)}_{2i_1,2i_1+1,0}$ | $W^{(2)}_{2i_1,2i_1+1,1}$ | $W^{(2)}_{2i_1+1,2i_1+2,0}$ | $W^{(2)}_{2i_1+1,2i_1+2,1}$ |
| $i_1$ | $i_2$ 12 | 13 | 14 | 15 |
| 0 - 15 | $W^{(2)}_{2i_1,2i_1+3,0}$ | $W^{(2)}_{2i_1,2i_1+3,1}$ | $W^{(2)}_{2i_1+1,2i_1+3,0}$ | $W^{(2)}_{2i_1+1,2i_1+3,1}$ |
| where, $W^{(2)}_{m,m',n} = \frac{1}{4}\begin{bmatrix} v_m & v_{m'} \\ \varphi_n v_m & -\varphi_n v_{m'} \end{bmatrix}$ | | | | |

Here, a single discrete Fourier transform (DFT) vector is used to characterize, for each group of antennas with the same polarization component direction, a beamforming direction. A phase weighting factor vector is used to characterize how to coherently combine signals from two groups of antennas with different polarization component directions. The phase weighting factor and the DFT vector are as below:

$$\varphi_n = e^{j\pi n/2} \quad \text{(Phase weighting factor)}$$

$$v_m = \begin{bmatrix} 1 & e^{j2\pi m/32} & e^{j4\pi m/32} & e^{j6\pi m/32} \end{bmatrix}^T \quad \text{(DFT Vector)}$$

According to the above, non-patent document 2 actually provides a method for constructing a pre-coding matrix for 1 D antenna array using double precoders (that is, the one represented by the DFT vector and the one presented by the phase weighting factor vector) corresponding to double codewords W1 and W2. Since the 1 D antenna array can only identify azimuth angles but not elevation angles (that is, one spatial dimension is ignored), the solution in non-patent document 2 only applies to a specific propagation environment that may be modeled as a 2D channel model, rather than a general propagation environment that may be normally modeled as a 3D channel model. For the 2D antenna array shown in figure 2 which utilizes both azimuth angles and elevation angles, this means that: the solution in non-patent document 2 only applies to a special scenario in which the cell radius is extremely large such that most users have extremely small elevation angles that are negligible.

The objective of the disclosure is to provide a method for constructing a MIMO pre-coding matrix for a 2D antenna array which is widely applicable to 3D propagation environments.

[Solutions to the problem]

In a first aspect of the disclosure, a method for constructing a 3D MIMO pre-coding matrix is provided. The method comprises: constructing a first component matrix in a block diagonal form, wherein a diagonal sub-matrix of the first component matrix characterizes 3D beamforming for a 2D antenna array; constructing a second component matrix which comprises phase weighting factors as matrix elements, wherein the phase weighting factors characterize coherent combination of signals from the 2D antenna array; and constructing the 3D MIMO pre-coding matrix according to the constructed first and second component matrixes.

Correspondingly, in a second aspect of the disclosure, a method for feeding back index values of a 3D MIMO pre-coding matrix is provided. The method comprises: estimating a MIMO channel; and according to a result of the channel estimation, selecting and feeding back a first index value, a second index value and a third index value so as to enable constructing a pre-coding matrix in a 3D MIMO pre-coding codebook according to the above-described method, wherein the first index value indicates a first DFT vector in a set of first DFT vectors, the second index value indicates a second DFT vector in a set of second DFT vectors, the third index value indicates a second component matrix in a set of second component matrixes.

In a third aspect of the disclosure, a communication device for constructing a 3D MIMO pre-coding matrix is provided. The communication device comprises: a first component matrix constructing unit configured to construct a first component matrix in a block diagonal form, wherein a diagonal sub-matrix of the first component matrix characterizes 3D beamforming for a 2D antenna array; a second component matrix constructing unit configured to construct a second component matrix which comprises phase weighting factors as matrix elements, wherein the phase weighting factors characterize coherent combination of signals from the 2D antenna array; and a pre-coding matrix constructing unit configured to construct the 3D MIMO pre-coding matrix according to the constructed first and second component matrixes.

In a fourth aspect of the disclosure, a communication device for feeding back index values of a 3D MIMO pre-coding matrix is provided. The communication device comprises: a channel estimation unit configured to estimate a MIMO channel; and a feedback unit configured to, according to result of the channel estimation, select and feed back a first index value, a second index value and a third index value so as to enable constructing a pre-coding matrix in a 3D MIMO pre-coding codebook according to the above-described communication device, wherein the first index value indicates a first DFT vector in a set of first DFT vectors, the second index value indicates a second DFT vector in a set of second DFT vectors, the third index value indicates a second component matrix in a set of second component matrixes.

[Technical effect]

At least the following beneficial effects may be achieved by using the solutions of the disclosure:

- The pre-coding matrix is constructed from two component matrixes, and this is easy to implement;
- The component matrixes are easy to construct;
- Signaling overhead is low in that only 3 index values need to be fed back for constructing the pre-coding matrix construction.

## BRIEF DESCRIPTION OF THE DRAWINGS

The above and other objectives, features and advantages of the disclosure would become more apparent from the following description of embodiments of the disclosure in conjunction with the drawings, wherein:

Figure 1 is a diagram of a 1 D cross-polarized linear antenna array that is only able to identify azimuth angles but not elevation angles;

Figure 2 is a diagram of a 2D cross-polarized linear antenna array that is able to identify both azimuth angles and elevation angles;

Figure 3 shows a method for constructing a 3D MIMO pre-coding matrix according to the disclosure;

Figure 4 is a diagram of an example of a first component matrix constructed according to the method shown in Figure 3;

Figure 5 shows a method for feeding back index values of a 3D MIMO pre-coding matrix according to the disclosure;

Figure 6 is a block diagram illustrating a structure of a communication device for constructing a 3D MIMO pre-coding matrix according to the disclosure; and

Figure 7 is a block diagram illustrating a structure of a communication device for feeding back index values of a 3D MIMO pre-coding matrix according to the disclosure.

## DETAILED DESCRIPTION OF EMBODIMENTS

Hereinafter, embodiments of the disclosure will be described in detail with reference to the drawings. In the description, details and functions irrelevant to the disclosure are omitted so as not to obscure the understanding of the disclosure.

In order to elaborate implementation steps of the disclosure, embodiments of the disclosure which are applicable to LTE-Release 12 cellular communication system are provided below. Note that the disclosure is not limited to the embodiments but is applicable to other communication systems, such as LTE systems after LTE-Release 12. Accordingly, technical terms used here may also change with the Release. Additionally, in the description below, the principles and specific examples of the disclosure are described in detail with respect to the arrangement of the 2D cross-polarized linear antenna array as shown in Figure 2. However, those skilled in the art will appreciate that the examples given below as being dependent on particular configurations of an antenna array (such as the number of antennas, the shape of the array, polarization mode, etc.) are only for illustration rather than limitation. For example, those skilled in the art would readily figure out several equivalent variants of the equations listed below and envisage, according to the teachings of the disclosure, how to apply the disclosure to an antenna array consisting of more antennas, a co-polarized antenna array or a circular antenna array.

Now, a method for constructing a 3D MIMO pre-coding matrix according to the disclosure will be described with respect to Fig. 3. As shown, the method begins with step S310. At this step, a first component matrix $W_{1,3D}$ in a block diagonal form is constructed. A diagonal sub-matrix of the first component matrix characterizes 3D beamforming for a 2D antenna array.

Taking rank=1 as an example, the first component matrix $W_{1,3D}$ may take the form shown in figure 4. The diagonal sub-matrixes $f_{3D,red}$ and $f_{3D,blue}$ correspond to different polarization component directions of the antenna array respectively. In order to characterize 3D beamforming, $f_{3D}$ may be represented as the Kronecker product $\otimes$ of two discrete Fourier transform (DFT) vectors. According to the mathematic definition of the Kronecker product, assuming A is a matrix of size m $\times$ n, B is a matrix of size p$\times$q, then their Kronecker product is a block matrix of size mp$\times$nq calculated according to the formula as follows:

$$A \otimes B = \begin{bmatrix} a_{11}B & \cdots & a_{1n}B \\ \vdots & \ddots & \vdots \\ a_{m1}B & \cdots & a_{mn}B \end{bmatrix}.$$

More specifically,

$$A \otimes B = \begin{bmatrix} a_{11}b_{11} & a_{11}b_{12} & \cdots & a_{11}b_{1q} & \cdots & \cdots & a_{1n}b_{11} & a_{1n}b_{12} & \cdots & a_{1n}b_{1q} \\ a_{11}b_{21} & a_{11}b_{22} & \cdots & a_{11}b_{2q} & \cdots & \cdots & a_{1n}b_{21} & a_{1n}b_{22} & \cdots & a_{1n}b_{2q} \\ \vdots & \vdots & \ddots & \vdots & & & \vdots & \vdots & \ddots & \vdots \\ a_{11}b_{p1} & a_{11}b_{p2} & \cdots & a_{11}b_{pq} & \cdots & \cdots & a_{1n}b_{p1} & a_{1n}b_{p2} & \cdots & a_{1n}b_{pq} \\ \vdots & \vdots & & \vdots & \ddots & & \vdots & \vdots & & \vdots \\ \vdots & \vdots & & \vdots & & \ddots & \vdots & \vdots & & \vdots \\ a_{m1}b_{11} & a_{m1}b_{12} & \cdots & a_{m1}b_{1q} & \cdots & \cdots & a_{mn}b_{11} & a_{mn}b_{12} & \cdots & a_{mn}b_{1q} \\ a_{m1}b_{21} & a_{m1}b_{22} & \cdots & a_{m1}b_{2q} & \cdots & \cdots & a_{mn}b_{21} & a_{mn}b_{22} & \cdots & a_{mn}b_{2q} \\ \vdots & \vdots & \ddots & \vdots & & & \vdots & \vdots & \ddots & \vdots \\ a_{m1}b_{p1} & a_{m1}b_{p2} & \cdots & a_{m1}b_{pq} & \cdots & \cdots & a_{mn}b_{p1} & a_{mn}b_{p2} & \cdots & a_{mn}b_{pq} \end{bmatrix}.$$

For the linear antenna array shown in Figure 2, the first DFT vector and second DFT vector are particularly suitable to be applied to horizontal and vertical antenna arrays of the 2D antenna array respectively, and are denoted as $f_{1,H}$ and $f_{1,V}$ accordingly. In such a case, $f_{3D}$ has the following mathematical form:

$$f_{3D} = f_{1,H} \otimes f_{1,V} \cdot$$

The above example can be readily generalized to cases where rank>1. For example, when rank=2, the first component matrix $W_{1,3D}$ may be represented as:

$$W_{1,3D} = \begin{vmatrix} f_{3D,(1)} & f_{3D,(2)} & \cdots & & & \\ & & & f_{3D,(1)} & f_{3D,(2)} & \cdots \end{vmatrix}$$

wherein $f_{3D},(_i) = f_H,(_i) \otimes fV,(_i)$ and i represents the number of flows in the MIMO signal transmission, i.e. rank.

Next, the method proceeds to step S320. At this step, a second component matrix W2 is constructed. The second component matrix comprises phase weighting factors as matrix elements. As in non-patent document 2, the phase weighting factors characterize coherent combination of signals from the 2D antenna array.

Finally, the method proceeds to step S330. At this step, the 3D MIMO pre-coding matrix is constructed using the first component matrix constructed in step S310 and the second component matrix constructed in step S320.

According to the above method, given a set of the first DFT vectors, a set of the second DFT vectors and a set of the second component matrixes, a complete 3D MIMO pre-coding codebook may be obtained. For the linear antenna array shown in Figure 2, when the rank of the channel is 1, a codebook shown in table 3 below may be obtained:

Table 3

| $\left(i_1, i_1'\right)$ | $i_2$ 0 | 1 | 2 | 3 | 4 | 5 | 6 | 7 |
|---|---|---|---|---|---|---|---|---|
| (0~15, 0~15) | $W^{(1)}_{2i_1,2i_1',0}$ | $W^{(1)}_{2i_1,2i_1',1}$ | $W^{(1)}_{2i_1,2i_1',2}$ | $W^{(1)}_{2i_1,2i_1',3}$ | $W^{(1)}_{2i_1+1,2i_1',0}$ | $W^{(1)}_{2i_1+1,2i_1',1}$ | $W^{(1)}_{2i_1+1,2i_1',2}$ | $W^{(1)}_{2i_1+1,2i_1',3}$ |
| $\left(i_1, i_1'\right)$ | $i_2$ 8 | 9 | 10 | 11 | 12 | 13 | 14 | 15 |
| (0~15, 0~15) | $W^{(1)}_{2i_1,2i_1'+1,0}$ | $W^{(1)}_{2i_1,2i_1'+1,1}$ | $W^{(1)}_{2i_1,2i_1'+1,2}$ | $W^{(1)}_{2i_1,2i_1'+1,3}$ | $W^{(1)}_{2i_1+1,2i_1'+1,0}$ | $W^{(1)}_{2i_1+1,2i_1'+1,1}$ | $W^{(1)}_{2i_1+1,2i_1'+1,2}$ | $W^{(1)}_{2i_1+1,2i_1'+1,3}$ |
| where, $W^{(1)}_{m,k,n} = \frac{1}{\sqrt{32}}\begin{bmatrix} v_{m,k} \\ \phi_n v_{m,k} \end{bmatrix}$ | | | | | | | | |

where,

$$\Phi_n = e^{j\pi n/2}$$

$$v_{m,k} = \begin{bmatrix} 1 & e^{j2\pi m/32} & e^{j4\pi m/32} & e^{j6\pi m/32} \end{bmatrix}^T \otimes \begin{bmatrix} 1 & e^{j2\pi k/32} & e^{j4\pi k/32} & e^{j6\pi k/32} \end{bmatrix}^T.$$

When the rank of the channel is 2, a codebook shown in table 4 below may be obtained:

Table 4

| $(i_1, i_1')$ | $i_2$: 0 | 1 | 2 | 3 |
|---|---|---|---|---|
| (0~15, 0~15) | $W^{(2)}_{2i_1,2i_1',2i_1,2i_1',0}$ | $W^{(2)}_{2i_1,2i_1',2i_1,2i_1',1}$ | $W^{(2)}_{2i_1,2i_1',2i_1,2i_1',2}$ | $W^{(2)}_{2i_1,2i_1',2i_1,2i_1',3}$ |
| $(i_1, i_1')$ | $i_2$: 4 | 5 | 6 | 7 |
| (0~15, 0~15) | $W^{(2)}_{2i_1+1,2i_1'+1,2i_1+1,2i_1'+1,0}$ | $W^{(2)}_{2i_1+1,2i_1'+1,2i_1+1,2i_1'+1,1}$ | $W^{(2)}_{2i_1+1,2i_1'+1,2i_1+1,2i_1'+1,2}$ | $W^{(2)}_{2i_1+1,2i_1'+1,2i_1+1,2i_1'+1,3}$ |
| $(i_1, i_1')$ | $i_2$: 8 | 9 | 10 | 11 |
| (0~15, 0~15) | $W^{(2)}_{2i_1,2i_1',2i_1+1,2i_1'+1,0}$ | $W^{(2)}_{2i_1,2i_1',2i_1+1,2i_1'+1,1}$ | $W^{(2)}_{2i_1,2i_1',2i_1+1,2i_1'+1,2}$ | $W^{(2)}_{2i_1,2i_1',2i_1+1,2i_1'+1,3}$ |
| $(i_1, i_1')$ | $i_2$: 12 | 13 | 14 | 15 |
| (0~15, 0~15) | $W^{(2)}_{2i_1+1,2i_1'+1,2i_1,2i_1',0}$ | $W^{(2)}_{2i_1+1,2i_1'+1,2i_1,2i_1',1}$ | $W^{(2)}_{2i_1+1,2i_1'+1,2i_1,2i_1',2}$ | $W^{(2)}_{2i_1+1,2i_1'+1,2i_1,2i_1',3}$ |

where,

$$W^{(2)}_{m,k,m',k',n} = \frac{1}{\sqrt{64}} \begin{bmatrix} v_{m,k} & v_{m',k'} \\ \phi_n v_{m,k} & -\phi_n v_{m',k'} \end{bmatrix}$$

where,

$$\Phi_n = e^{j\pi n/2}$$

$$v_{m,k} = \begin{bmatrix} 1 & e^{j2\pi m/32} & e^{j4\pi m/32} & e^{j6\pi m/32} \end{bmatrix}^T \otimes \begin{bmatrix} 1 & e^{j2\pi k/32} & e^{j4\pi k/32} & e^{j6\pi k/32} \end{bmatrix}^T.$$

As we can see from the above codebooks, the method for constructing a 3D MIMO pre-coding matrix according to the disclosure requires only 3 index values $i_1$, $i_1'$ and $i_2$ to construct the pre-coding matrix. Signaling overhead required for feeding back the index values is low.

Correspondingly, Figure 5 shows a method for feeding back index values of a 3D MIMO pre-coding matrix according to the disclosure. As shown, the method begins with step S510. At this step, the MIMO channel is estimated. Next, step S520 is executed, where a first index value, a second index value and a third index value are selected and fed back according to a result of the channel estimation at step S510, so as to enable constructing a 3D MIMO pre-coding matrix according to the method provided in the disclosure. The first index value indicates a first DFT vector in a set of first DFT vectors, the second index value indicates a second DFT vector in a set of second DFT vectors, and the third index value indicates a second component matrix in a set of second component matrixes.

[Hardware implementation]

In order to implement the above methods in hardware, the disclosure provides a communication device 600 for constructing a 3D MIMO pre-coding matrix. Figure 6 is a block diagram illustrating a structure of the communication device 600. As shown, the communication device 600 comprises: a first component matrix constructing unit 610 configured to construct a first component matrix in a block diagonal form, wherein a diagonal sub-matrix of the first component matrix characterizes 3D beamforming for a 2D antenna array; a second component matrix constructing unit 620 configured to construct a second component matrix which comprises phase weighting factors as matrix elements, wherein the phase weighting factors characterize coherent combination of signals from the 2D antenna array; and a pre-coding matrix constructing unit 630 configured to construct the 3D MIMO pre-coding matrix according to the constructed first and second component matrixes. The communication device may be a transmitting point and/or a user equipment. Each transmitting point is constituted of all or part of transmitting ports of one or more base stations. In particular implementations, a transmitting point may correspond to a base station.

Correspondingly, the disclosure further provides a communication device 700 for feeding back index values of a 3D MIMO pre-coding matrix. Figure 7 is a block diagram illustrating a structure of the communication device 700. As shown, the communication device 700 comprises: a channel estimation unit 710 configured to estimate a MIMO channel; and a feedback unit 720 configured to, according to result of the channel estimation, select and feed back a first index value, a second index value and a third index value so as to enable constructing a pre-coding matrix in a 3D MIMO pre-coding codebook according to the above-described communication device. The first index value indicates a first DFT vector in a set of first DFT vectors, the second index value indicates a second DFT vector in a set of second DFT vectors, and the third index value indicates a second component matrix in a set of second component matrixes. The communication device may be a user equipment.

In a first aspect of the disclosure, a method for constructing a 3D MIMO pre-coding matrix is provided. The method comprises: constructing a first component matrix in a block diagonal form, wherein a diagonal sub-matrix of the first component matrix characterizes 3D beamforming for a 2D antenna array; constructing a second component matrix which comprises phase weighting factors as matrix elements, wherein the phase weighting factors characterize coherent combination of signals from the 2D antenna array; and constructing the 3D MIMO pre-coding matrix according to the constructed first and second component matrixes.

Preferably, the diagonal sub-matrix of the first component matrix is the Kronecker product of a first DFT vector and a second DFT vector.

Preferably, the first DFT vector and the second DFT vector are respectively applied to horizontal and vertical antenna arrays of the 2D antenna array.

Preferably, a set of the first DFT vectors, a set of the second DFT vectors and a set of the second component matrixes define the 3D MIMO pre-coding codebook.

Correspondingly, in a second aspect of the disclosure, a method for feeding back index values of a 3D MIMO pre-coding matrix is provided. The method comprises: estimating a MIMO channel; and according to a result of the channel estimation, selecting and feeding back a first index value, a second index value and a third index value so as to enable constructing a pre-coding matrix in a 3D MIMO pre-coding codebook according to the above-described method. The first index value indicates a first DFT vector in a set of first DFT vectors, the second index value indicates a second DFT vector in a set of second DFT vectors, and the third index value indicaties a second component matrix in a set of second component matrixes.

In a third aspect of the disclosure, a communication device for constructing a 3D MIMO pre-coding matrix is provided. The communication device comprises: a first component matrix constructing unit configured to construct a first component matrix in a block diagonal form, wherein a diagonal sub-matrix of the first component matrix characterizes 3D beamforming for a 2D antenna array; a second component matrix constructing unit configured to construct a second component matrix which comprises phase weighting factors as matrix elements, wherein the phase weighting factors characterize coherent combination of signals from the 2D antenna array; and a pre-coding matrix constructing unit configured to construct the 3D MIMO pre-coding matrix according to the constructed first and second component matrixes.

Preferably, the communication device may be a transmitting point and/or a user equipment. The transmitting point may be a base station.

In a fourth aspect of the disclosure, a communication device for feeding back index values of a 3D MIMO pre-coding matrix is provided. The communication device comprises: a channel estimation unit configured to estimate a MIMO channel; and a feedback unit configured to, according to a result of the channel estimation, select and feed back a first index value, a second index value and a third index value so as to enable constructing a pre-coding matrix in a 3D MIMO pre-coding codebook according to the above-described communication device. The first index value indicates a first DFT vector in a set of first DFT vectors, the second index value indicates a second DFT vector in a set of second DFT vectors, and the third index value indicates a second component matrix in a set of second component matrixes.

Preferably, the communication device is a user equipment.

It should be noted that, although the technical solution of the disclosure is illustrated in the above description by way of example, it does not mean that the disclosure is limited to the above steps and structural units. The steps and structural units may be adjusted or omitted according to demand when possible. Thus, some steps and structural units are not essential for embodying the general inventive concept of the disclosure. Therefore, the essential technical features of the disclosure are only limited by the minimum requirements for embodying the general inventive concept rather than by the above embodiments.

The disclosure has been described in detail with reference to embodiments thereof. It should be appreciated that, those skilled in the art may make various alteration, substitution and addition to the disclosure without departing from the spirit and scope thereof. Therefore, the scope of the disclosure is not limited to the above specific embodiments but defined by the claims appended below.

## Claims

**1.** A method for constructing a three-dimensional (3D) multi-input multi-output (MIMO) pre-coding matrix, comprising:

constructing a first component matrix in a block diagonal form, wherein a diagonal sub-matrix of the first component matrix characterizes 3D beamforming for a two-dimensional (2D) antenna array;
constructing a second component matrix which comprises phase weighting factors as matrix elements, wherein the phase weighting factors characterize coherent combination of signals from the 2D antenna array; and
constructing the 3D MIMO pre-coding matrix according to the constructed first and second component matrixes.

**2.** A method according to claim 1, wherein the diagonal sub-matrix of the first component matrix is a Kronecker product of a first discrete Fourier transform (DFT) vector and a second DFT vector.

**3.** A method according to claim 2, wherein the first DFT vector and the second DFT vector are respectively applied to horizontal and vertical antenna arrays of the 2D antenna array.

**4.** A method according to claim 2 or 3, wherein a set of the first DFT vectors, a set of the second DFT vectors and a set of the second component matrixes define a 3D MIMO pre-coding codebook.

**5.** A method for feeding back index values of a three-dimensional (3D) multi-input multi-output (MIMO) pre-coding matrix, comprising:

estimating a MIMO channel; and
according to a result of the channel estimation, selecting and feeding back a first index value, a second index value and a third index value so as to enable constructing a pre-coding matrix in a 3D MIMO pre-coding codebook according to the method of claim 4, wherein the first index value indicates a first DFT vector in a set of first DFT vectors, the second index value indicates a second DFT vector in a set of second DFT vectors, the third index value indicates a second component matrix in a set of second component matrixes.

**6.** A communication device for constructing a three-dimensional (3D) multi-input multi-output (MIMO) pre-coding matrix, comprising:

a first component matrix constructing unit configured to construct a first component matrix in a block diagonal form, wherein a diagonal sub-matrix of the first component matrix characterizes 3D beamforming for a two-dimensional (2D) antenna array;
a second component matrix constructing unit configured to construct a second component matrix which comprises phase weighting factors as matrix elements, wherein the phase weighting factors characterize coherent combination of signals from the 2D antenna array; and
a pre-coding matrix constructing unit configured to construct the 3D MIMO pre-coding matrix according to the constructed first and second component matrixes.

**7.** A communication device according to claim 6, wherein the diagonal sub-matrix of the first component matrix is a Kronecker product of a first discrete Fourier transform (DFT) vector and a second DFT vector.

**8.** A communication device according to claim 7, wherein the first DFT vector and the second DFT vector are respectively applied to horizontal and vertical antenna arrays of the 2D antenna array.

**9.** A communication device according to claim 7 or 8, wherein a set of the first DFT vectors, a set of the second DFT vectors and a set of the second component matrixes define a 3D MIMO pre-coding codebook.

**10.** A communication device according to claim 6, wherein the communication device is a transmitting point and/or a user equipment.

**11.** A communication device according to claim 10, wherein the transmitting point is a base station.

**12.** A communication device for feeding back index values of a three-dimensional (3D) multi-input multi-output (MIMO) pre-coding matrix, comprising:

a channel estimation unit configured to estimate a MIMO channel; and
a feedback unit configured to, according to a result of the channel estimation, select and feed back a first index value, a second index value and a third index value so as to enable constructing a pre-coding matrix in a 3D MIMO pre-coding codebook according to the communication device of claim 9, wherein the first index value indicates a first DFT vector in a set of first DFT vectors, the second index value indicates a second DFT vector in a set of second DFT vectors, the third index value indicates a second component matrix in a set of second component matrixes.

**13.** A communication device according to claim 12, wherein the communication device is a user equipment.

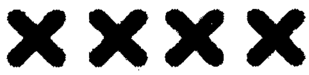

Figure 1

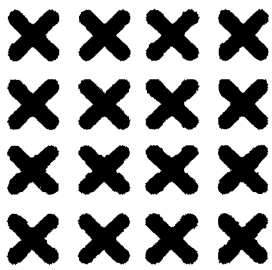

Figure 2

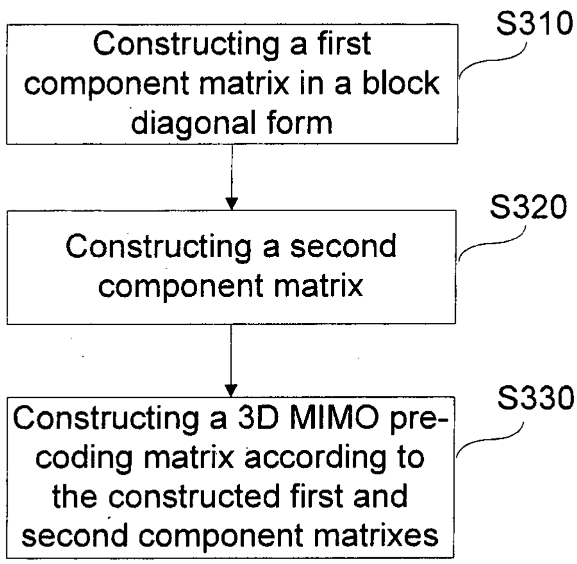


Figure 3

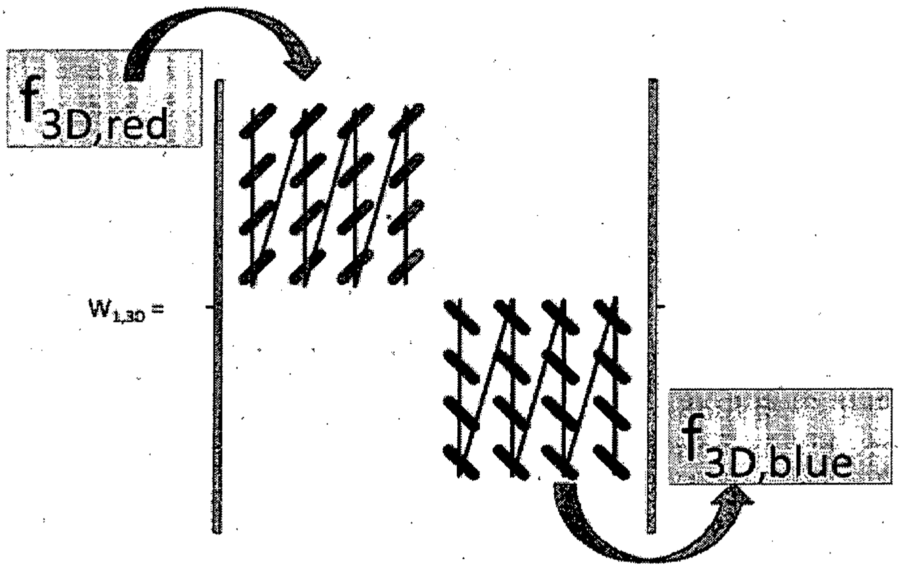


Figure 4

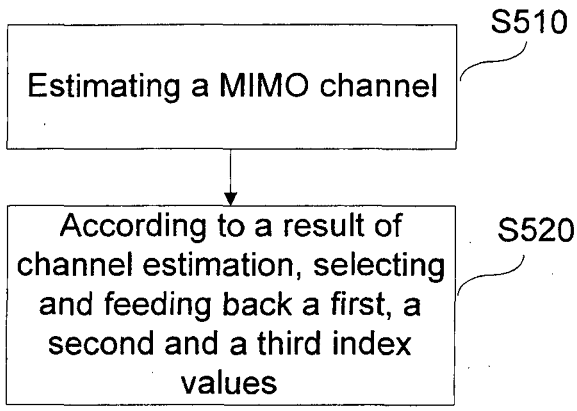


Figure 5

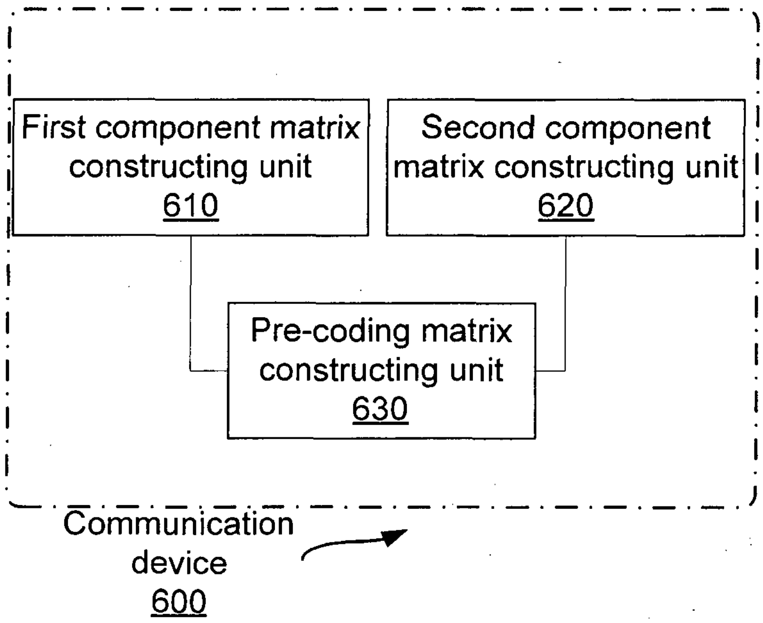


Figure 6

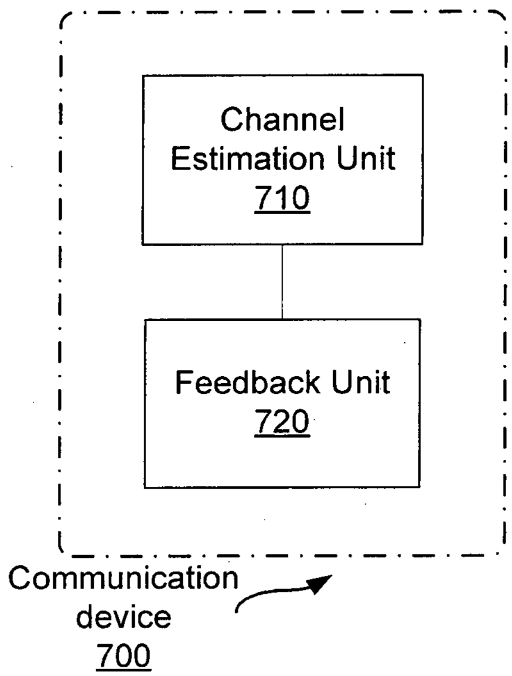
Channel
Estimation Unit
710
Feedback Unit
720
Communication
device
700

Figure 7

# INTERNATIONAL SEARCH REPORT

International application No.
**PCT/IB2013/001744**

**A. CLASSIFICATION OF SUBJECT MATTER**

H04L 1/00 (2006.01) i

According to International Patent Classification (IPC) or to both national classification and IPC

**B. FIELDS SEARCHED**

Minimum documentation searched (classification system followed by classification symbols)

IPC: H04L, H04Q, H04W

Documentation searched other than minimum documentation to the extent that such documents are included in the fields searched

Electronic data base consulted during the international search (name of data base and, where practicable, search terms used)

EPODOC, WPI, CNPAT, CNKI, IEEE: multiple-input-multiple-output, diagonal matrix, two-dimensional antenna, three-dimensional beamforming, phase weighting, weighting factor, coherent merge, discrete fourier transform, vector, index value, instruction, codebook, MIMO, precoding, PMI, precoding matrix, diagonal, DFT, kronecker, codeword, Beam Forming, weight, antenna, array, horizontal, vertical

**C. DOCUMENTS CONSIDERED TO BE RELEVANT**

| Category* | Citation of document, with indication, where appropriate, of the relevant passages | Relevant to claim No. |
|---|---|---|
| X | WO 2011/140062 A1 (MOTOROLA MOBILITY.INC.), 10 November 2011 (10.11.2011), claims 1-16, and description, paragraphs [00021] to [000119] | 1-13 |
| A | EP 1873931 A2 (BROADCOM CORPORATION), 02 January 2008 (02.01.2008), the whole document | 1-13 |
| A | US 2011/0085610 A1 (MOTOROLA. INC.), 14 April 2011 (14.04.2011), the whole document | 1-13 |
| A | CN 102130752 A (HUAWEI TECHNOLOGIES CO., LTD.), 20 July 2011 (20.07.2011), the whole document | 1-13 |

☐ Further documents are listed in the continuation of Box C. ☒ See patent family annex.

* Special categories of cited documents:

“A” document defining the general state of the art which is not considered to be of particular relevance

“E” earlier application or patent but published on or after the international filing date

“L” document which may throw doubts on priority claim(s) or which is cited to establish the publication date of another citation or other special reason (as specified)

“O” document referring to an oral disclosure, use, exhibition or other means

“P” document published prior to the international filing date but later than the priority date claimed

“T” later document published after the international filing date or priority date and not in conflict with the application but cited to understand the principle or theory underlying the invention

“X” document of particular relevance; the claimed invention cannot be considered novel or cannot be considered to involve an inventive step when the document is taken alone

“Y” document of particular relevance; the claimed invention cannot be considered to involve an inventive step when the document is combined with one or more other such documents, such combination being obvious to a person skilled in the art

“&” document member of the same patent family

| Date of the actual completion of the international search | Date of mailing of the international search report |
|---|---|
| 07 January 2014(07.01.2014) | **23 January 2014 (23.01.2014)** |
| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br>**GAO, Xu**<br>Telephone No.: (86-10) **62413259** |

Form PCT/ISA/210 (second sheet) (July 2009)

# INTERNATIONAL SEARCH REPORT
Information on patent family members

International application No.
**PCT/IB2013/001744**

| Patent Documents referred in the Report | Publication Date | Patent Family | Publication Date |
|---|---|---|---|
| WO 2011/140062 A1 | 10.11.2011 | US 2011/0274188 A1 | 10.11.2011 |
| EP 1873931 A2 | 02.01.2008 | CN 101068124 A | 07.11.2007 |
| | | US 2007/0258536 A1 | 08.11.2007 |
| | | TW 200814597 A | 16.03.2008 |
| US 2011/0085610 A1 | 14.04.2011 | None | |
| CN 102130752 A | 20.07.2011 | WO 2011/085695 A1 | 21.07.2011 |
| | | US 2012/0275500 A1 | 01.11.2012 |
| | | EP 2525505 A1 | 21.11.2012 |
| | | US 2013/0121437 A1 | 16.05.2013 |
| | | CN 103220087 A | 24.07.2013 |
| | | CN 103248457 A | 14.08.2013 |

Form PCT/ISA/210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- As a quasi-4G system which is based on Orthogonal Frequency Division Multiplexing (OFDM). *LTE system had its first release,* 2009
- **VINCENT LAU ; YOUJIAN LIU ; TAI-ANN CHEN.** On the Design of MIMO Block-Fading Channels with Feedback-Link Capacity Constraint. *IEEE Transactions on Communications,* January 2004, vol. 52 (1), 62-70